# EUROPEAN PATENT APPLICATION

(11) **EP 4 538 158 A1**
(43) Date of publication of application: **16.04.2025**
(21) Application number: 24168459.6
(22) Date of filing: 04.04.2024
(51) Int. Cl.: B62M 3/06, B62M 1/36

(54) **BICYCLE POWER-SAVING CRANK**

(30) Priority: 11.10.2023 TW 112138735
(71) Applicant: Lo, Ching-Chang, Changhua City Changhua County 500021 (TW); Wang, Chin-Chu, Taichung City 436031 (TW); Lo, Ya-Chi, Changhua City Changhua County 500021 (TW); Lo, Ya-Hsin, Changhua City Changhua County 500021 (TW); Lo, Chih-Kun, Changhua City Changhua County 500021 (TW)
(72) Inventor: LO, CHING-CHANG, 500021 Changhua City (TW); WANG, CHIN-CHU, 436031 Taichung City (TW); WANG, TING-YUAN, 436031 Taichung City (TW); LO, LI-CHIEH, 500021 Changhua City, Changhua County (TW); WANG, TING-HUI, 436031 Taichung City (TW); LIN, HUNG-HSUAN, 421007 Taichung City (TW)
(74) Representative: Cabinet Chaillot

(57) **Abstract**

A bicycle power-saving crank includes: a base arm, positioned on an outside of a chainwheel and connected at one end to the chainwheel, wherein the base arm is rotatable synchronously with the chainwheel; a base sprocket, fixed to the base arm and facing in the chainwheel; an outer sprocket, rotatably connected to the other end of the base arm via an outer spindle; a transmission component, rotatably connected to the base sprocket and the outer sprocket; and an outer arm, having one end rotatably connected to the outer spindle and rotatable synchronously with the outer sprocket and the other end rotatably connected to a pedal. Through the addition of the outer arm, an additional length results in an increased lever arm length, achieving power saving.

## Description

### BACKGROUND OF THE INVENTION

### Fields of the invention

The present invention relates to a driving structure of a bicycle and, more particularly, to the combined structure of the crank.

### Descriptions of Related Art

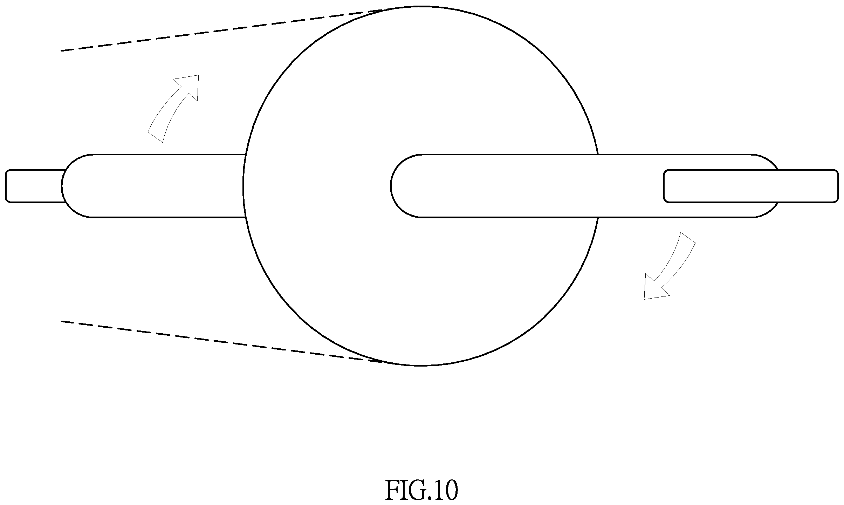

The current bicycle driving, as shown in FIG. 10, involves a chainwheel rotatably connected to a frame via an axle, with a pair of cranks connected to the axle and the chainwheel in opposite directions, respectively. The ends of the cranks are connected to rotatable pedals. When pedaling a bicycle, force is exerted on the pedals and cranks by both feet, causing the cranks to rotate along a counterclockwise circular trajectory. This rotational movement of the cranks along the aforementioned path initiates the pivoting of the chainwheel, subsequently propelling the chain into rotation. The rotational motion of the chain impels the rear sprocket to revolve, ultimately leading to the rotation of the rear wheel and resulting in the forward motion of the bicycle.

In the absence of specialized cycling shoes designed for secure attachment to clipless pedals, the rotation of the cranks along their circular trajectory relies primarily on the downward force applied during pedaling. During the upstroke phase of pedaling, as the pedal is in an upward motion, effective force application becomes challenging. To increase operational efficiency, one solution is to wear cycling shoes with cleats capable of securely engaging with the pedals. However, the majority of the general public wears regular shoes when cycling and does not opt for clipless pedal system.

### SUMMARY OF THE INVENTION

The present invention provides a bicycle power-saving crank, comprising:
a base arm, positioned on an outside of a chainwheel and connected at one end to the chainwheel, wherein the base arm is rotatable synchronously with the chainwheel;
a base sprocket, fixed to the base arm and facing in the chainwheel;
an outer sprocket, rotatably connected to the other end of the base arm via an outer spindle;
a transmission component, rotatably connected to the base sprocket and the outer sprocket; and
an outer arm, having one end rotatably connected to the outer spindle and rotatable synchronously with the outer sprocket and the other end rotatably connected to a pedal;
wherein the outer arm is rotatably connected to the base arm and rotatable synchronously with the chainwheel along a circular base arm trajectory, while the pedal is rotatably connected to the outer arm and rotatable synchronously with the base arm along a circular outer arm trajectory that is offset outward in a travel direction relative to the base arm trajectory.

The base arm has a length approximately the same as that of the currently known crank. Through the addition of the outer arm, an additional length results in an increased lever arm length, achieving power saving. Additionally, because the outer arm trajectory is offset outward in the travel direction compared to the base arm trajectory, the original dead spot position (where applying downward force vertically is ineffective for transmitting pedaling force) shifts forward. This adjustment enables more effective force transmission, resulting in energy savings and improved pedaling performance.

### BRIEF DESCRIPTION OF THE DRAWINGS

FIG. 1 is a side schematic view of the present invention, with the crank in a forward-extending position.
FIG. 2 is an operational schematic view of the present invention with the base arm in a downward-extending position.
FIG. 3 is an operational schematic view of the present invention with the base arm in a backward-extending position.
FIG. 4 is an operational schematic view of the present invention with the base arm in an upward-extending position.
FIG. 5 is a simulated operational schematic view of the base arm positions of FIGS. 1 to 4.
FIG. 6 is a schematic view showing the elevation angle of the outer arm relative to the base arm in the present invention.
FIG. 7 is a partially enlarged schematic view of FIG. 6.
FIG. 8 is a schematic view showing the trajectories of the base arm and the outer arm in the present invention.
FIG. 9 is a simulated schematic view showing the power-saving frame for implementation of the present invention compared to a standard frame.
FIG. 10 is a side schematic view of the crank and the chainwheel of a conventional bicycle.

### DETAILED DESCRIPTION OF THE PREFERRED EMBODIMENT

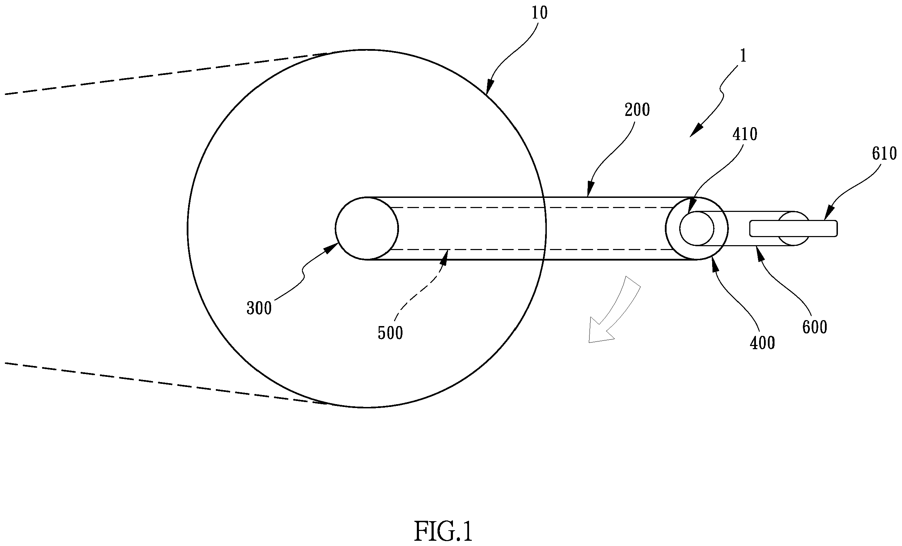

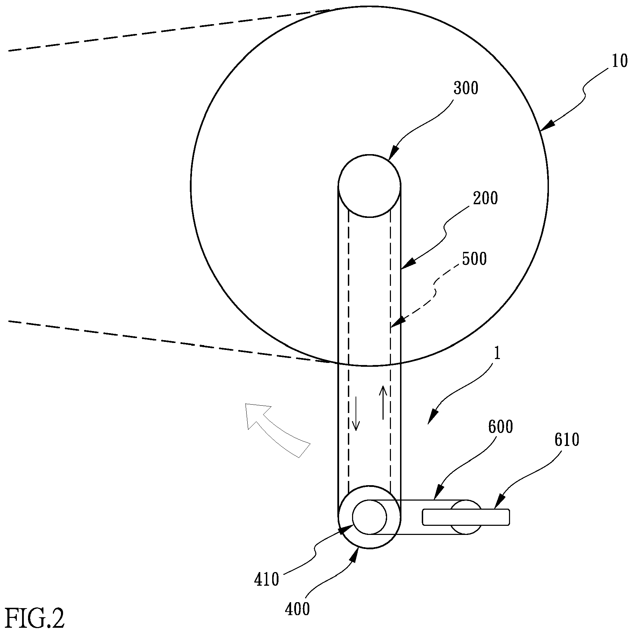

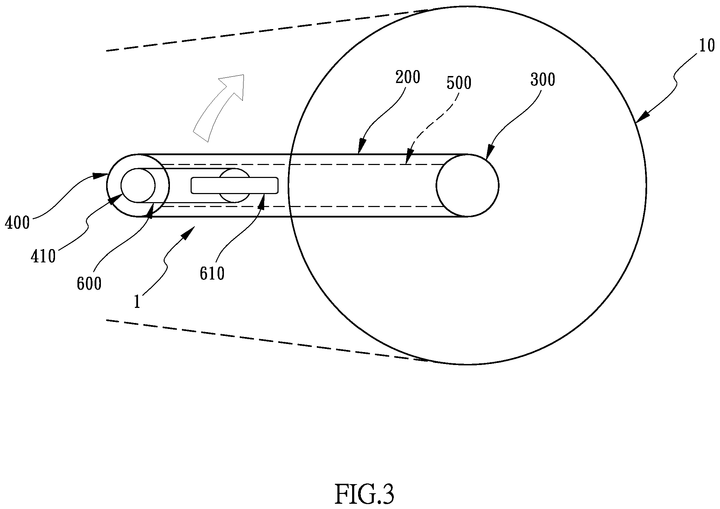

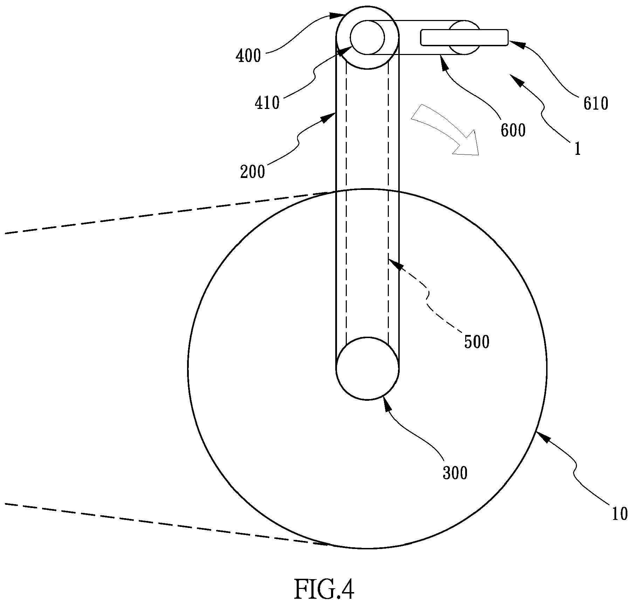

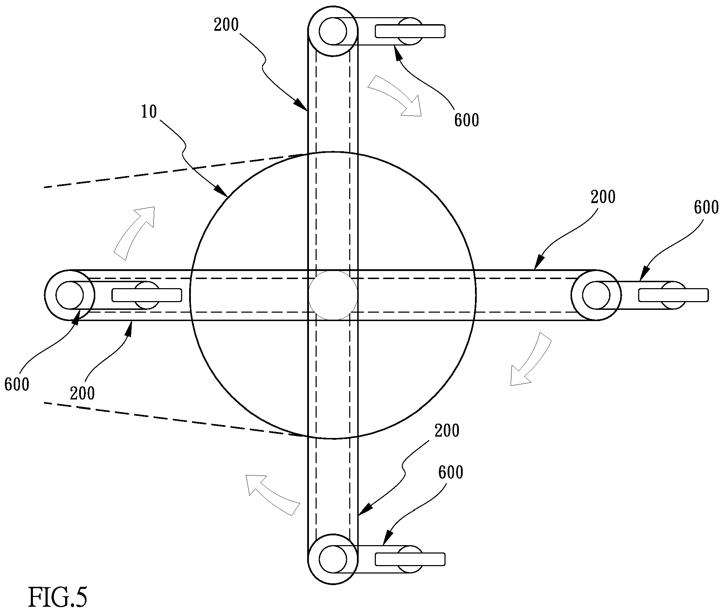

Please refer to FIGS. 1 to 5 and 8, which illustrate a bicycle power-saving crank 1, including:
a base arm 200, positioned on the outside of a chainwheel 10 and connected at one end to the chainwheel 10, wherein the base arm 200 can rotate synchronously with the chainwheel 10;
a base sprocket 300, fixed to the base arm 200 and facing in the chainwheel 10;
an outer sprocket 400, rotatably connected to the other end of the base arm 200 via an outer spindle 410;
a transmission component 500, rotatably connected to the base sprocket 300 and the outer sprocket 400; and
an outer arm 600, having one end rotatably connected to the outer spindle 410 and configured to rotate synchronously with the outer sprocket 400 and the other end rotatably connected to a pedal 610.

The outer arm 600 is rotatably connected to the base arm 200 and can rotate synchronously with the chainwheel 10 along a circular base arm trajectory T1. The pedal 610 is rotatably connected to the outer arm 600 and can rotate synchronously with the base arm 200 along a circular outer arm trajectory T2 that is offset outward in the travel direction relative to the base arm trajectory T1.

The base arm 200 has a length approximately the same as that of the currently known crank (e.g., 170 mm). Through the addition of the outer arm 600, an additional length (approximately 85 mm) results in an increased lever arm length (the total length of the base arm and outer arm axes is 255 mm). This is equivalent to increasing the original lever arm length by half (compared to the original length of just 170 mm for the crank), resulting in a potential power savings of 50%. Additionally, because the outer arm trajectory T2 is offset outward in the travel direction compared to the base arm trajectory T1, the original dead spot position (where applying downward force vertically is ineffective for transmitting pedaling force) shifts forward in the direction of bicycle travel (e.g., to the right in the figure). This adjustment enables more effective force transmission, resulting in energy savings and improved pedaling performance.

It should be noted that the present invention combines the base arm 200 and the outer arm 600 to form a crank. In principle, a bicycle is driven by a pair of cranks in opposite positions to rotate the chainwheel 10. However, for clarity in identifying component positions and operation, only a single crank is depicted in the figures, and the installation of the bicycle power-saving crank 1 on the bicycle frame is not shown.

The axial dimension of the base arm 200 in the present invention is greater than that of the outer arm 600. In principle, the base arm 200 has generally the same size as the traditional crank. The main difference is that the crank of the present invention is further equipped with the outer arm 600, which can change its position continuously during pedaling. This not only increases its forward application but also allows the outer arm 600 to retract unnecessary extensions in the rearward direction.

Further details of the components and the synergistic functionality achievable through their mutual assembly are described below. In the bicycle power-saving crank 1 of the present invention, the transmission component 500 can be a chain or gear. In this embodiment, a chain is used as an example of the transmission component 500, wrapping around both the base sprocket 300 and the outer sprocket 400. The aforementioned gear may be a bevel gear which can facilitate shifting and power transmission. With the transmission component 500 operating in conjunction with the base sprocket 300 and the outer sprocket 400, the rotational position of the outer arm 600 relative to the base arm 200 can be effectively controlled, allowing for precise control of the circular outer arm trajectory T2 along which the outer arm 600 rotates in relation to the base arm 200.

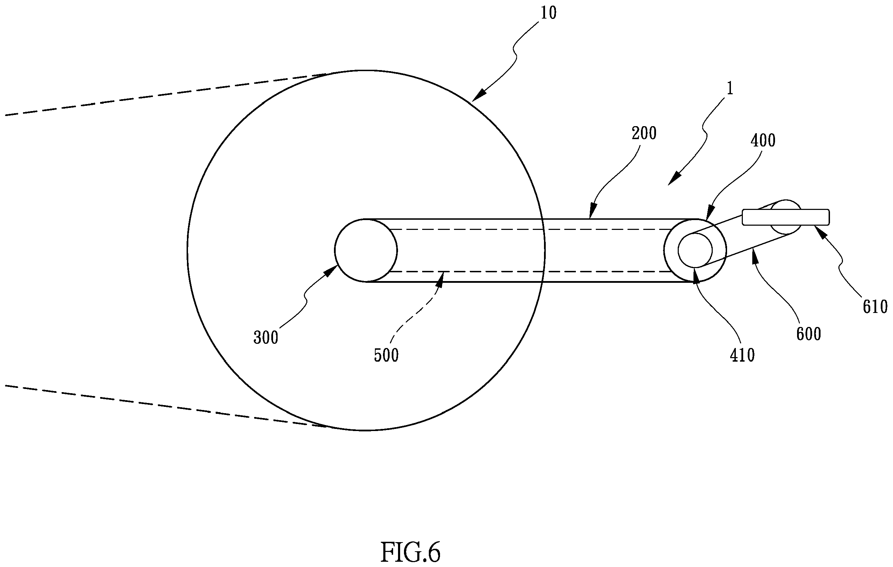

When the base arm 200 is horizontally extended in the direction of bicycle travel, the outer arm 600 extends in the same direction as the base arm 200, as shown in FIGS. 1 and 6. This represents the total length of the base arm 200 and the outer arm 600 when both are in a horizontal state, which is the position where the longest lever arm is achieved.

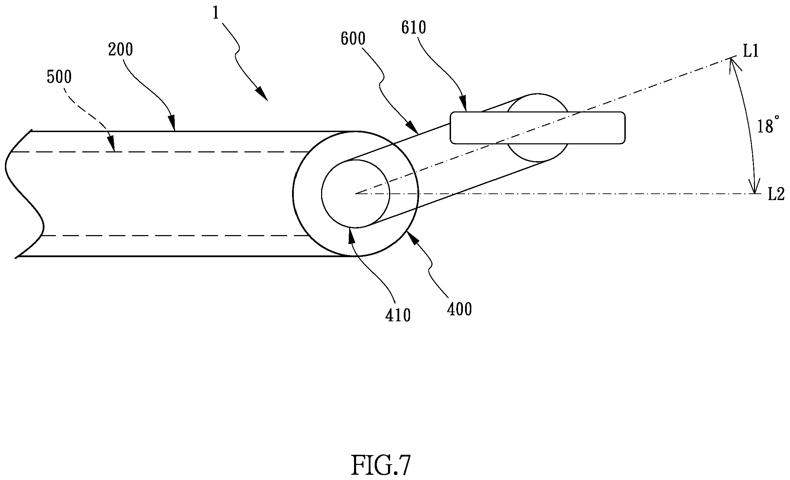

In addition to the configuration where the base arm 200 is horizontally extended in the direction of bicycle travel and both the base arm 200 and the outer arm 600 are in a horizontal state, another configuration is shown in FIGS. 6 and 7, in which the axial extension line L1 of the outer arm 600 forms an angle relative to the horizontal extension line L2 of the base arm 200 when the base arm 200 is horizontally extended in the direction of bicycle travel, resulting in an elevation angle of the outer arm 600 relative to the base arm 200. In this configuration, pedaling can be performed more efficiently. The aforementioned angle mentioned is set at 36° in this illustration, but the optimal angle for implementing the present invention is 18°.

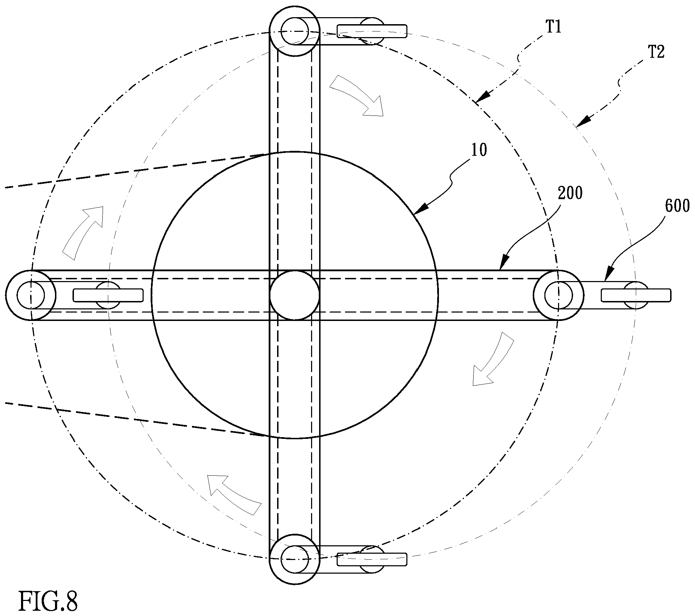

Please referring to FIG. 8, the base arm trajectory T1 and the outer arm trajectory T2 have the same diameter and intersect twice. The shortest distance between the outer arm trajectory T2 and the chainwheel 10 is less than the smallest distance between the base arm trajectory T1 and the chainwheel 10.

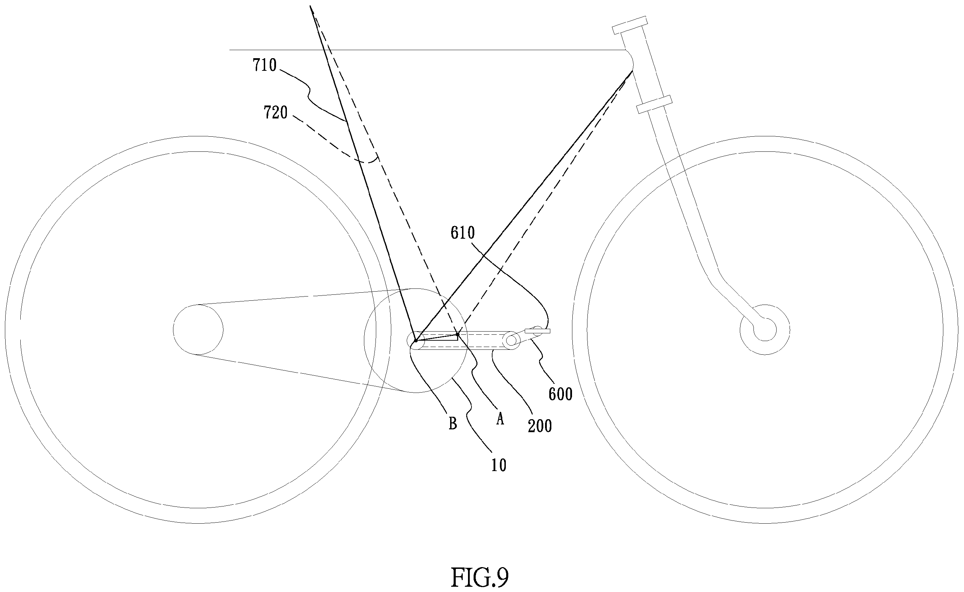

Accordingly, as shown in FIG. 9, when the bicycle power-saving crank 1 is applied to the bicycle frame, the bicycle frame is adapted to the power-saving crank 1 and is referred to herein as the power-saving frame 710. In this context, the position where the crank is installed to the frame, i.e. the center of the main spindle tube (commonly known as the bottom bracket), is set to shift backward and downward relative to a standard frame 720. In the illustration, the point A represents the center where the chainwheel is mounted on the standard frame 720, while the point B represents the center where the chainwheel 10 is mounted on the power-saving frame 710. The length of the outer arm 600 (i.e. the distance between the outer spindle 410 and the pedal 610) is denoted as Y. The base arm 200 is horizontally extended in the direction of bicycle travel, and the elevation angle of the outer arm 600 relative to the base arm 200 is denoted as *θ*. As a result, the rearward displacement value of the central position of the main spindle tube in the power-saving frame 710 is calculated as B = A - Y cos *θ*, and the downward displacement value of the central position of the main spindle tube in the power-saving frame 710 is calculated as B = A - Y sin *θ*.

## Claims

1. A bicycle power-saving crank, **characterized in that** :
a base arm (200), positioned on an outside of a chainwheel (10) and connected at one end to the chainwheel (10), wherein the base arm (200) is rotatable synchronously with the chainwheel (10);
a base sprocket (300), fixed to the base arm (200) and facing in the chainwheel (10);
an outer sprocket (400), rotatably connected to the other end of the base arm (200) via an outer spindle (410);
a transmission component (500), rotatably connected to the base sprocket (300) and the outer sprocket (400); and
an outer arm (600), having one end rotatably connected to the outer spindle (410) and rotatable synchronously with the outer sprocket (400) and the other end rotatably connected to a pedal (610);
wherein the outer arm (600) is rotatably connected to the base arm (200) and rotatable synchronously with the chainwheel (10) along a circular base arm trajectory (T1), while the pedal (610) is rotatably connected to the outer arm (600) and rotatable synchronously with the base arm (200) along a circular outer arm trajectory (T2) that is offset outward in a travel direction relative to the base arm (200) trajectory.

2. The bicycle power-saving crank as claimed in claim 1, wherein transmission component (500) is a chain or gear.

3. The bicycle power-saving crank as claimed in claim 1, wherein when the base arm (200) is horizontally extended in the travel direction, the outer arm (600) extends in the same direction as the base arm (200).

4. The bicycle power-saving crank as claimed in claim 1, wherein when the base arm (200) is horizontally extended in the travel direction, an axial extension line (L1) of the outer arm (600) forms an angle relative to a horizontal extension line (L2) of the base arm (200), resulting in an elevation angle of the outer arm (600) relative to the base arm (200).

5. The bicycle power-saving crank as claimed in claim 4, wherein the elevation angle is 36°.

6. The bicycle power-saving crank as claimed in claim 4, wherein the elevation angle is 18°.

7. The bicycle power-saving crank as claimed in claim 1, wherein the base arm (200) trajectory and the outer arm (600) trajectory have the same diameter and intersect twice.

8. The bicycle power-saving crank as claimed in claim 1, wherein a shortest distance between the outer arm (600) trajectory and the chainwheel (10) is less than a smallest distance between the base arm (200) trajectory and the chainwheel (10).

9. The bicycle power-saving crank as claimed in claim 1, wherein an axial dimension of the base arm (200) is greater than that of the outer arm (600).
